# EUROPEAN PATENT APPLICATION

(11) **EP 3 272 707 A1**
(43) Date of publication of application: **24.01.2018**
(21) Application number: 16180605.4
(22) Date of filing: 21.07.2016
(51) Int. Cl.: C01B 19/00

(54) **NICKEL IRON DISELENIDE COMPOUND, PROCESS FOR THE PREPARATION THEREOF AND ITS USE AS A CATALYST FOR OXYGEN EVOLUTION REACTION**

(71) Applicant: Ecole Polytechnique Fédérale de Lausanne (EPFL), 1015 Lausanne (CH)
(72) Inventor: Hu, Xile, 1003 Lausannne (CH); Song, Fang, 1020 Renens (CH)
(74) Representative: Micheli & Cie SA

(57) **Abstract**

The present invention relates to a nickel iron diselenide compound of general formula (I): NiₓFe₁-ₓSe₂, wherein 0 < x < 1, and to the use of this compound as a precursor of catalysts for oxygen evolution reaction (OER).

This invention also concerns methods for the preparation of said precursor of catalysts for OER, the resulting catalysts, and applications thereof.

## Description

The invention concerns new catalysts for oxygen evolution reaction and precursors of these catalysts, processes for obtaining them and applications thereof.

Sunlight-driven water splitting or carbon dioxide (CO₂) reduction to make solar fuels is a promising solution to solar energy storage. Essential to the water splitting and CO₂ reduction reactions is the oxygen evolution reaction (OER). This reaction is kinetically sluggish and demands an efficient electrocatalyst.

Although noble metal-based catalysts such as IrO₂ and RuO₂ exhibit good OER activity, their scarcity and high cost pose great constrains for large scale applications. Moreover, a substantial overpotential is still required to drive the OER with these catalysts.

Tremendous efforts have been made in recent years to develop non-precious OER catalysts. The majority of non-precious OER catalysts are metal oxides and (oxy)hydroxides.

Recently, a few non-oxide-based OER catalysts including metal phosphides, sulfides, and selenides have been reported. Metal selenides have been reported as promising oxygen evolution catalysts, however, their active forms has not been elucidated. Given the limited stability of these compounds under highly oxidative potentials in alkaline solutions, questions have arisen on the nature of the true active species.

It has been shown that surface area is an important factor in OER catalysts. In fact, it as been proven that NiFe layered double hydroxide (LDH) particules have a catalytic activity superior to that of bulk NiFe LDH but inferior to that of nanosheets of NiFe LDH.

Up to now, the most active OER catalyst known is a hybrid catalyst r-GO/NiFe LDH resulting from the combination of layered FeNi double hydroxide that is catalytically active and electric conducting graphene sheets which gave 10 mA cm-² at an overpotential of 195 mV. Because of the high cost of electric conducting graphene sheets, this hybrid catalyst is very expensive.

The present invention has been made in view of the prior art described above, and the object of the present invention is to provide new OER catalysts that enable water oxidation at potentials close to the thermodynamic limit and that are the least expensive as possible.

Using a post-catalytic analysis, the inventors have shown that NiSe is completely converted into nickel hydroxides during OER, indicating that metal oxides or hydroxides are the active and final forms of this metal selenide pre-catalyst in OER.

Moreover, the inventors synthesize a hitherto unknown selenide, nickel iron diselenide (NiₓFe₁₋ₓSe₂), and show that upon in-situ transformation into oxides, this compound catalyzes OER with an overpotential of only 195 mV at a current density of 10 mA cm⁻². This is until now the most active single-phase OER catalyst in alkaline solutions.

The present invention provides a nickel iron diselenide compound of general formula (I) NiₓFe₁₋ₓSe₂, wherein 0 < x < 1, preferably 0.7 < x < 0.9, more preferably x = 0.8.

Advantageously, said compound is nanostructured.

The present invention also concerns the use of said compound as precursor of a catalyst for OER.

The present invention provides a nickel iron diselenide derived oxide compound obtained by oxidation of the compound of formula (I).

Preferably, said nickel iron diselenide derived oxide is a compound of general formula (II) NiₓFe₁₋ₓ(OH)₃₋ₓ, wherein 0<x<1.

Nickel iron diselenide derived oxide according to the invention is preferably nanostructured.

The present invention also concerns the use of said nickel iron diselenide derived oxide as a catalyst of OER.

Other applications of compound of general formula (I) are considered, such as counter electrode materials for dye-sensitized solar cells (DSSCs) and anode materials in ion-batteries.

Moreover, the present invention provides a method for producing nickel iron diselenide compound of general formula (I) comprising the steps of : (a) using a hydrothermal method to make metal hydroxide precursors including Ni and Fe grow on nickel foam and (b) converting the metal hydroxide precursors into diselenides via a solvothermal selenization treatment. Advantageously, said metal hydroxide precursors including Ni and Fe include Ni(NO₃)₂.6H₂O and FeSO₄.7H₂O.

In a preferred embodiment, step (a) of previously mentioned method comprise the following steps :
(i) dissolve nickel salt, iron salt, NH₄F and urea or hexamethylenetetramine in water
(ii) seal the obtained solution with nickel foam in an autoclave
(iii) heat at a temperature between 100°C and 180°C for a time between 6 and 48 hours, preferably at a temperature of about 120°C and for a time of about 16 hours
(iv) wash with distilled water
   and step (b) comprises the following steps:
   (v) submerge the as-prepared nickel foam coated with NiFe hydroxides into autoclave containing Se, NaOH, hydrazine and dimethylformamide (DMF) or pyridine ; and
   (vi) keep at a temperature between 80 and 200°C for a time between 1 and 12 hours, preferably at a temperature of about 180°C and for a time of about 1 hour.

Preferably, said nickel salts are chosen among Ni(NO₃)₂.6H₂O, NiCl₂·6H₂O and Ni(OA_{C})₂·4H₂O and said iron salts are chosen among FeSO₄·7H₂O, FeCl₂·4H₂O and Fe(NO₃)₃·9H₂O.

Advantageously, a futher step (i') is added between steps (i) and (ii), said step (i') consisting in a first cleaning of said nickel foam ultrasonically with acetone and then with HCl solution and subsequently in a second cleaning with water and ethanol.

Advantageously, the wash of step (iv) is made with both water and absolute ethanol, in order to faster the drying.

Moreover, the present invention proposes a method for producing nickel iron diselenide derived oxide comprising the step of subjecting the nickel iron diselenide compound of formula (I) to galvanostatic electrolysis, for example at the current density of 5mA cm⁻², until reaching a stable potential.
Figures 1 a and 2a are transmission electron microscopy (TEM) images of NiSe respectively before and after galvanostatic electrolysis in which scale bars both correspond to 50nm.
Figures 1b and 2b are high resolution TEM (HRTEM) images of NiSe respectively before and after galvanostatic electrolysis in which scale bars both corresponds to 2nm.
Figures 1c and 2c result from selected area electron diffraction (SAED) pattern of the sample of Figures 1b and 2b, respectively.
Figure 3 shows the results of energy-dispensive X-ray spectra (EDS) of a sample of NiSe before and after galvanostatic electrolysis.
Figure 4a shows the results of powder X-ray diffraction (PXRD) pattern of NiₓFe₁₋ₓSe₂ compound obtained in example 2.
Figures 4b, 4c and 4d present the results of high resolution X-ray photoelectron spectroscopy (XPS) of Ni 2p3/2, Fe 2p3/2 and Se 3d for NiₓFe₁₋ₓSe₂ compound obtained in example 2.
Figures 5a and 5b, are scanning electron microscopy (SEM) images of NiₓFe₁₋ₓSe₂ as obtained from example 2, respectively with scale bars corresponding to 10µm and 1µm.
Figures 5c, 5d and 5e are respectively TEM, magnified TEM and HRTEM images of the same compound with scale bars respectively corresponding to 50nm, 20nm and 2nm.
Figures 6a and 6b, are SEM images of NiₓFe₁₋ₓSe₂-DO, respectively with scale bars corresponding to 10µm and 1µm.
Figures 6c, 6d and 6e are respectively TEM, magnified TEM and HRTEM images of the compound of Figures 6a and 6b with scale bars respectively corresponding to 50nm, 20nm and 2nm.
Figure 7a shows results of EDS of a sample of NiₓFe₁₋ₓSe₂ before (NiₓFe₁-ₓSe₂) and after (NiₓFe₁₋ₓSe₂-DO) galvanostatic electrolysis.
Figures 7b, 7c and 7d present the results of high resolution XPS of Se 3d, O1s and Ni 2p3/2 for both NiₓFe₁₋ₓSe₂ compound obtained in example 2 and NiₓFe₁₋ₓSe₂-DO compound obtained in example 4.
Figure 7e presents the results of PXRD pattern of NiₓFe₁₋ₓSe₂-DO.
Figure 8a, 8b, 8c and 8d respectively shows polarization curves, overpotential required for J = 10 mA cm⁻², current densities at η = 250 mV and tafel plots for NiₓFe₁₋ₓSe₂-DO, NiFe LDH, NiSe₂-DO, NiSe-DO and Nickel foam (NF).
In Figures 8b and 8c the error bars represent the range of results from three independent measurements.
Figure 8e represents the capacitive J vs scan rate for NiₓFe₁₋ₓSe₂-DO and NiFe LDH. The linear slope is equivalent to twice of the double-layer capacitance.
Figure 8f shows the results of chronopotentiometric measurements of OER at 10 mA cm⁻² using NiₓFe₁₋ₓSe₂-DO as catalyst. The inset shows the calculated versus actual oxygen production catalyzed by at a constant current of 1 mA. The calculated value represent the expected amount of O₂ assuming a quantitative Faradaic yield for O₂ formation.
Figures 9a and 9b respectively show polarization curves and tafel plots for NiₓFe₁₋ₓSe₂-DO, with x=1, 0.9, 0.8 and 0.67.
Figures 10a and 10b show SEM images of NiFe LDH and NiₓFe₁₋ₓSe₂-DO, respectively in which scale bars both correspond to 1µm.
Figures 10c and 10d are TEM images of NiₓFe₁₋ₓSe₂-DO of Figure 10b but with a closer view, the scale bars respectively correspond to 50nm and 10nm. Figure 10c indeed corresponds to a zoom of the boxed portion of figure 10b and Figure 10d corresponds to a zoom of the boxed portion of figure 10c.
Figure 11 shows pore size distribution of NiFe LDH and NiₓFe₁₋ₓSe₂-DO. Inset of this Figure shows the N₂ absorption-desorption isotherm.

Hereinafter, the present invention is described in more detail and specifically with reference to the examples, which however are not intended to limit the present invention.

### Example 1: Active form of NiSe in Oxygen evolution reaction

The electrocatalytic activity of NiSe toward OER was investigated in 1 M KOH using a three-electrode electrochemical system. Galvanostatic electrolysis at the current density of 10 mA cm⁻² was used to activate the catalyst. The activity was then measured by linear sweep voltammetry (LSV) at a scan rate of 1 mV s⁻¹. The overpotentials to reach 10 mA cm⁻² was about 253 mV, in agreement with previous reports concerning NiSe.

The morphology and composition of the catalyst before and after catalysis of OER for 12 hours was then examined.

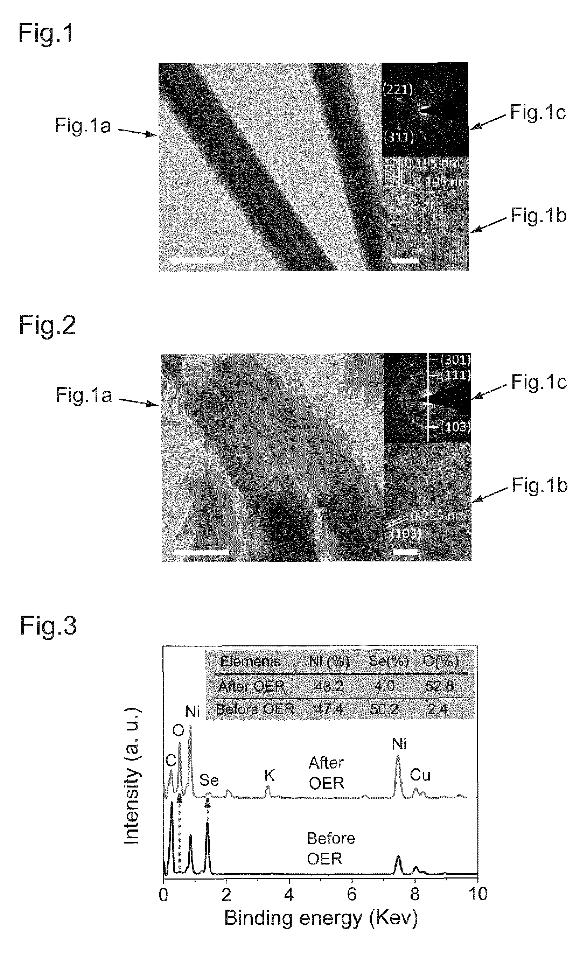

Figures 1 (1 a, 1b and 1 c) and 2 (2a, 2b and 2c) concern respectively NiSe before and after galvanostatic electrolysis.

Figures 1 a and 2a show that single-crystal nanowires of NiSe were converted to polycrystalline particles made of ultrathin nanosheets.

Figures 1b and 2b may indicate the conversion of NiSe into Ni(OH)₂.

Figures 1c and 2c result from selected area electron diffraction (SAED) pattern of the sample. In Figure 2c, the sample after galvanostatic electrolysis can be indexed to (111), (103), and (301) planes of alpha-Ni(OH)₂ (Figure 2c) (space group: P-31 m, JCPDS No. 22-0444). These Figures show the conversion of NiSe into Ni(OH)₂ during OER.

Results of Figure 3 show that the Se content decreased from 50.2% to 4.0%, but the oxygen content increased from 2.4% to 52.8% during the reaction. Thus, Se was nearly completely removed while oxygen was incorporated during galvanostatic electrolysis. The above data indicate that NiSe is entirely converted into Ni(OH)₂ under OER conditions. Ni(OH)₂ is the active form of the catalyst.

Interestingly, the activity of the NiSe-derived Ni(OH)₂ is higher than the most active Ni(OH)₂ nanoparticles prepared by direct synthesis, which requires 300 mV to reach 10 mA cm⁻² according to previous publications (Stern, L. A. & Hu, X. L. Enhanced oxygen evolution activity by NiOx and Ni(OH)2 nanoparticles. Faraday Discuss. 176, 363-379 (2014); Gao, M. et al. Efficient water oxidation using nanostructured α-nickel-hydroxide as an electrocatalyst. J. Am. Chem. Soc. 136, 7077-7084 (2014)), as shown for example in example 5.

This result suggests that metal selenides may serve as templating precursors to metal oxides or hydroxides with superior OER activity than those prepared by other methods.

With this in mind, the attention is turned out to nickel iron selenides, as compounds of general formula NiFeOγ are among the most active OER catalysts according to previously published studies.

### Example 2: Preparation of NiₓFe₁₋ₓSe₂

Metal selenides normally exist in two forms, mono-selenide (MSe) and diselenides (MSe2). The inventors attempted to synthesize both NiₓFe₁₋ₓSe and NiₓFe₁₋ₓSe₂. However, only di-selenide NiₓFe₁₋ₓSe₂ could be obtained.

NiSe₂ and FeSe₂ are well-known substances while NiₓFe₁₋ₓSe₂ was a hitherto unknown selenide, probably due to a mismatch between the crystal structures of NiSe₂ and FeSe₂. Both have a cubic structure (space group: Pa-3, JCPDS No. 88-1711), but NiSe₂ has a cell parameter of a = 5.960 Å, while FeSe₂ has a parameter of a = 5.776 Å.

To circumvent this mismatch, a reductive solvothermal process was applied using NiFe layered double hydroxide (LDH) grown on Ni foam as the precursor.

Ni(NO₃)₂·6H₂O (2.0 mmol, 582 mg), FeSO₄·7H₂O (0.5 mmol, 139 mg), NH₄F (10 mmol, 370 mg), and urea (25 mmol, 1501 mg) were dissolved in H₂O (40 mL). The as-obtained solution together with one piece of nickel foam (5 mmx30 mm) were then sealed in a 45 mL Teflon-lined stainless steel autocalve and heated at 120 °C in an electric oven for 16 hours. After being washed thoroughly with distilled water and absolute ethanol, the as-prepared nickel foam coated with NiFe hydroxides was submerged into another 45 mL autocalve containing Se (3.75 mmol, 296 mg), NaOH (7.5 mmol, 300 mg), hydrazine (0.14 mL) and DMF (25 mL). After keeping at 180 °C for one hour, a compound was obtained.

This compound has been subjected to characterization and to other experiments, as presented in examples 3 to 5. Surprisingly, conducted experiments show that selenidation of crystal lattices of NiFe LDH had lead to pure-phase NiₓFe₁₋ₓSe₂ without phase separation between NiSe₂ and FeSe₂. Characterization tests have shown that said obtained compound was NiₓFe₁₋ₓSe₂, with x about 0.8, which is consistent with the involved proportions of Ni and Fe in the preparation process (see example 3).

Samples of NiₓFe₁₋ₓSe₂ (x=1, 0.9, and 0.67) with variable Ni:Fe ratios have also been synthesized. To obtain this ratios Ni(NO₃)₂·6H₂O and FeSO₄·7H₂O with the desired molar ratio were dissolved in water with a total quantity of 2.5 mmol. When x=1, NiSe₂ was obtained.

### Example 3 : Characterization of NiₓFe₁₋ₓSe₂

This example shows the results of analysis of compound (NiₓFe₁₋ₓSe₂; x=0.8) obtained in example 2.

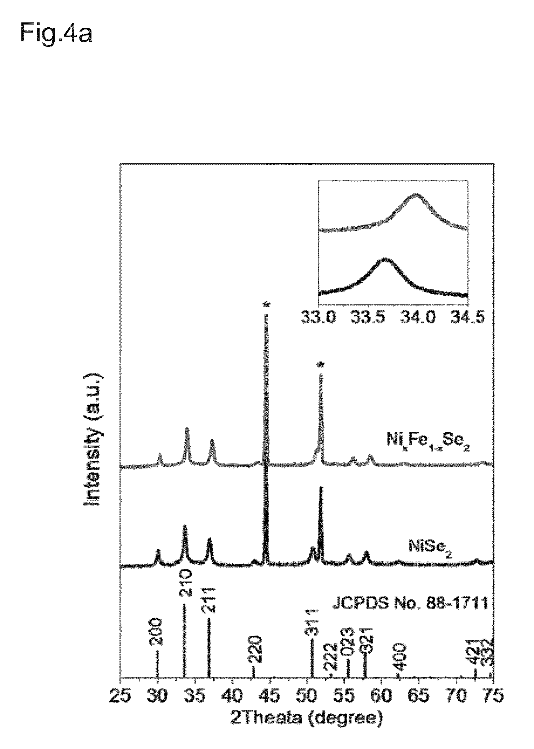

Results presented in Figure 4a indicate the formation of a cubic pyrite-phase metal selenide, similar to NiSe₂ (space group: Pa-3, JCPDS No. 88-1711).

No crystalline impurity was detected.

The diffraction peaks of studied compound were shifted to higher angles compared to their counter parts in NiSe₂ (upper right inset in Figure 4a). The crystal parameter of studied compound is a = 5.884 Å, which is between NiSe₂ (a=5.960 Å) and FeSe₂ (5.776 Å).

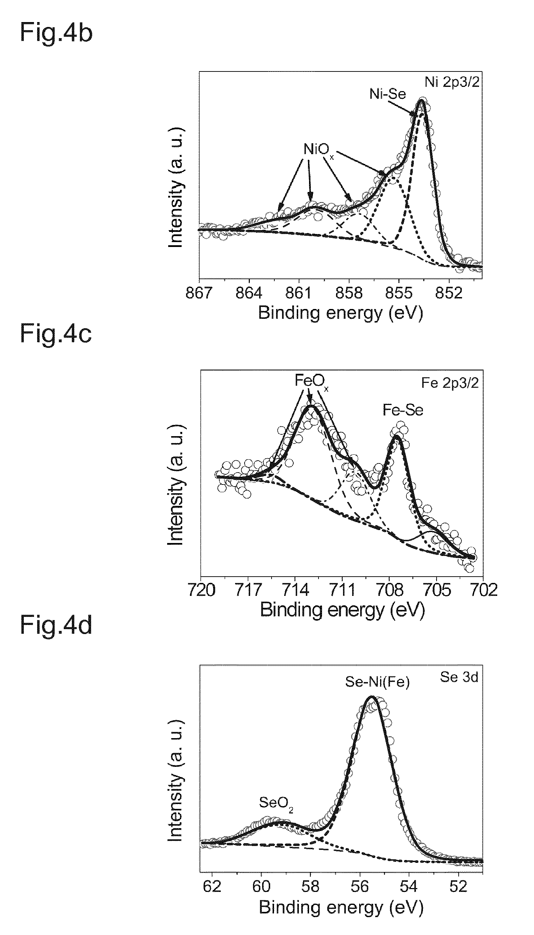

X-ray photoelectron spectroscopy (XPS) supported the formation of NiₓFe₁₋ₓSe₂. In fact, in both Ni 2p3/2 and Fe 2p3/2 spectra (Figures 4b and 4c), the main peaks have binding energies between those of the corresponding metal and metal oxides.

For example, the main peak at 853.5 eV in the Ni 2p3/2 spectra has a binding energy between nickel metal (852.6 eV) and nickel oxides (853.7∼854.9 eV). These binding energies are indicative of metal selenides.

The Se 3d5/2 binding energy of NiₓFe₁₋ₓSe₂ is 55.2 eV, shifted from 55.4 eV for elemental Se (Figure 4d).

The minor broad peaks in Figures 4b and 4c were attributed to surface impurities NiOₓ, FeOₓ, and SeO₂. This assignment is consistent with the previous finding that the surface of metal selenides is prone to oxidation by air.

The morphology of as-prepared NiₓFe₁₋ₓSe₂ (x=0.8) was first characterized by scanning electron microscopy (SEM).

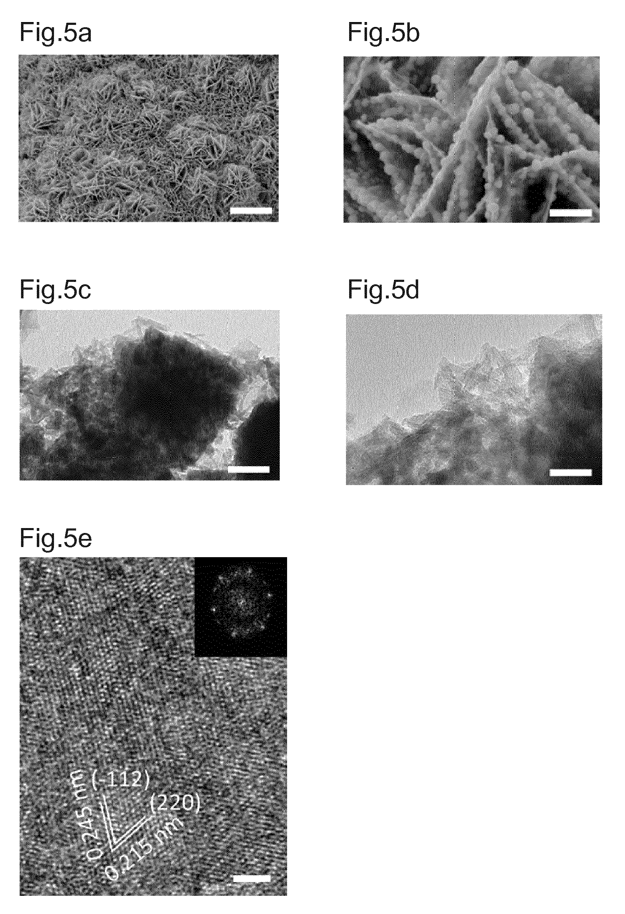

At the microscale, NiₓFe₁₋ₓSe₂ inherited the morphology of NiFe LDH, as shown in Figures 5a and 5b, and after selenidation, nanoplates of about 150 nm in thickness were formed.

Higher magnification images, however, revealed that in contrast to NiFe LDH nanoplates which have a smooth surface, NiₓFe₁₋ₓSe₂ nanoplates are composed of numerous nanoparticles (Figure 5b). The TEM image (Figure 5c) further revealed the porous hierarchical morphology of NiₓFe₁₋ₓSe₂.

The nanoparticles were made of ultrathin nanosheets, as shown in Figure 5d. HRTEM image indicated the single-crystal nature of each nanosheet, as illustrated by Figure 5e. In HRTEM image of Figure 5e, lattice fringes were observed, with inter-planar distances of ∼ 2.45 nm and ∼2.15 nm, corresponding to the (-112) and (220) planes, respectively. The basal plane of the nanosheet is (111), which was confirmed by fast fourier transform (FFT) image (inset in Figure 5e). These results give a structural confirmation that studied compound is NiₓFe₁₋ₓSe₂.

Elemental Mapping analysis has been conducted and has shown that Ni, Fe, and Se were homogenously distributed, consistent with the formation of single-phase NiₓFe₁₋ₓSe₂.

The atomic ratio of Se/Ni/Fe is around 7.3:2.6:1, which is consistent with the theroretically calculated value x=0.8 of studied compound NiₓFe₁₋ₓSe₂, according to the Ni:Fe ratio involved in the preparation of the nickel iron diselenide.

Example 4 : In situ transformation of NiₓFe₁₋ₓSe₂ in NiFeOγ under OER conditions

As mentioned above, the inventors sought to determine whether NiₓFe₁₋ₓSe₂ would be converted to NiFeOγ under OER conditions. The NiₓFe₁₋ₓSe₂-derived oxide would be referred to as "NiₓFe₁₋ₓSe₂-DO". "DO" is used to designate the selenide-derived oxide from hereon.

The inventors investigated if NiₓFe₁₋ₓSe₂-DO would inherit the potentially beneficial nanostructure of NiₓFe₁₋ₓSe₂.

Thus, NiₓFe₁₋ₓSe₂-DO was obtained by subjecting NiₓFe₁₋ₓSe₂ to galvanostatic electrolysis at the current density of 5 mA cm⁻² until a stable potential was reached.

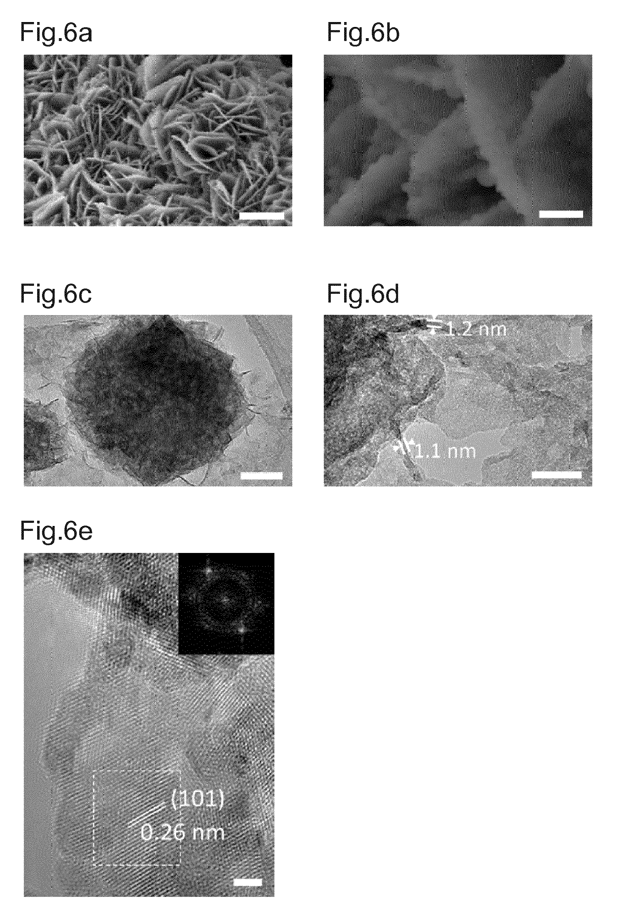

SEM images of Figures 6a and 6b showed that NiₓFe₁₋ₓSe₂-DO had a similar overall morphology to NiₓFe₁₋ₓSe₂.

TEM images of Figures 6c and 6d showed the nanosheets of NiₓFe₁₋ₓSe₂-DO were only about 1-2 nm in thickness.

HRTEM image of Figure 6e showed lattice fringes of NiₓFe₁₋ₓSe₂-DO which were different from those of NiₓFe₁₋ₓSe₂. The inter-planar distance of 2.61 nm NiₓFe₁₋ₓSe₂-DO was indexed to the (101) planes of metal hydroxides (e.g., LDH or alpha-Ni(OH)₂).

Elemental mapping of both NiₓFe₁₋ₓSe₂ and NiₓFe₁₋ₓSe₂-DO (not shown) and corresponding energy-dispensive X-ray spectra (EDS) have also been made.

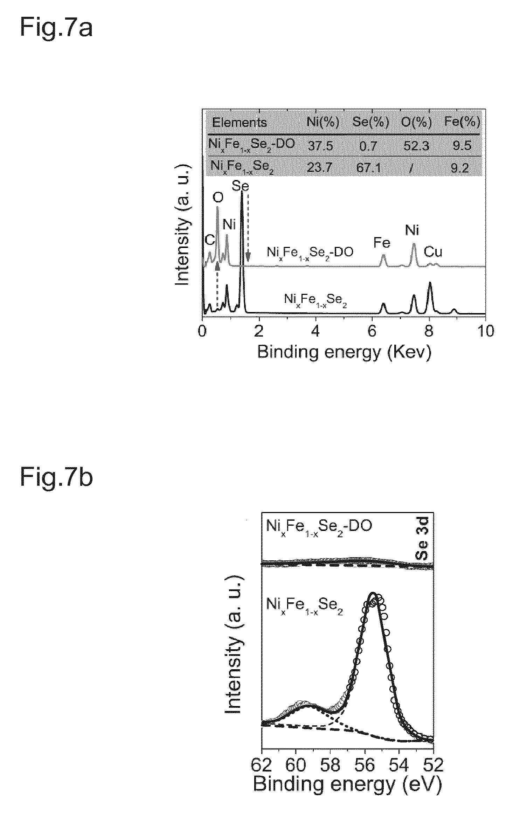

Results of the EDS are shown in Figure 7a. From NiₓFe₁₋ₓSe₂ to NiₓFe₁₋ₓSe₂-DO, Ni and Fe remained homogeneously distributed, Se was removed, while oxygen was incorporated. Based on the EDS, the Se content decreased from 67.1 % in NiₓFe₁₋ₓSe₂ to 0.7% in NiₓFe₁₋ₓSe₂-DO, and the oxygen content increased from undetectable in NiₓFe₁₋ₓSe₂ to 52.3% in NiₓFe₁₋ₓSe₂-DO.

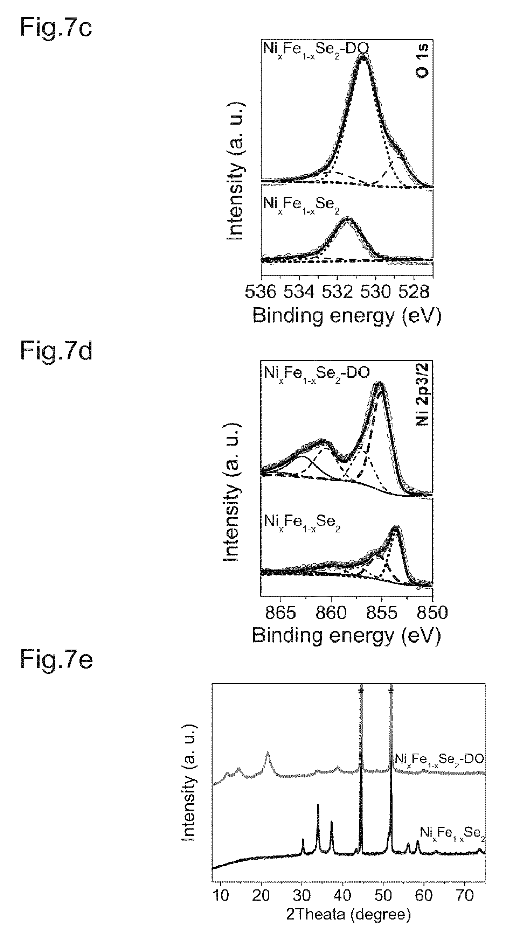

The compositional change was further confirmed by high resolution XPS spectra, as shown in Figures 7b, 7c and 7d.

The Se 3d peak nearly vanished while the O 1 s peak increased dramatically in intensity. The main peak in the O 1 s spectrum was at 530.6 eV, attributed to Ni-OH or Fe-OH (Ali-Loytty, H. et al. Ambient-pressure XPS study of a Ni-Fe electrocatalyst for the oxygen evolution reaction. J Phys. Chem. C 120, 2247-2253 (2016)).

Based on the XPS spectra, the atomic percentages of O and Se were around 47.7% and 1.29% in NiₓFe₁₋ₓSe₂-DO, in agreement with the EDS results.

The Ni 2p3/2 peak was shifted from 853.5 eV in NiₓFe₁₋ₓSe₂ to 855.1 eV in NiₓFe₁₋ₓSe₂-DO, also consistent with the formation of NiFeO_{y}.

Finally, the PXRD pattern of NiₓFe₁₋ₓSe₂-DO shown in Figure 7e also indicated the disappearance of NiₓFe₁₋ₓSe₂ and the formation of a crystalline NiFeOγ phase.

Based on previous studies of the electrochemical oxidation of NiSe and MoSe₂ in basic solutions, the in-situ transformation is proposed to occur via the following pathways:

*NiₓFe*₁*₋ₓSe*₂ + (15-*x*) *OH⁻=NiₓFe*_{1-*x*}(OH)_{3*-x*}+2*S*eO₃²⁻+6*H₂O*+(11*-x*)*e⁻* (1)

*NiₓFe*₁₋*ₓSe*₂ + (19-*x*) *OH*⁻=*Niₓ*Fe_{1-*x*}(OH)_{3-*x*}+2*S*eO₄²⁻+8*H*₂*O*+(15-*x*)*e*⁻ (2)

### Example 5 : Oxygen evolution catalysis

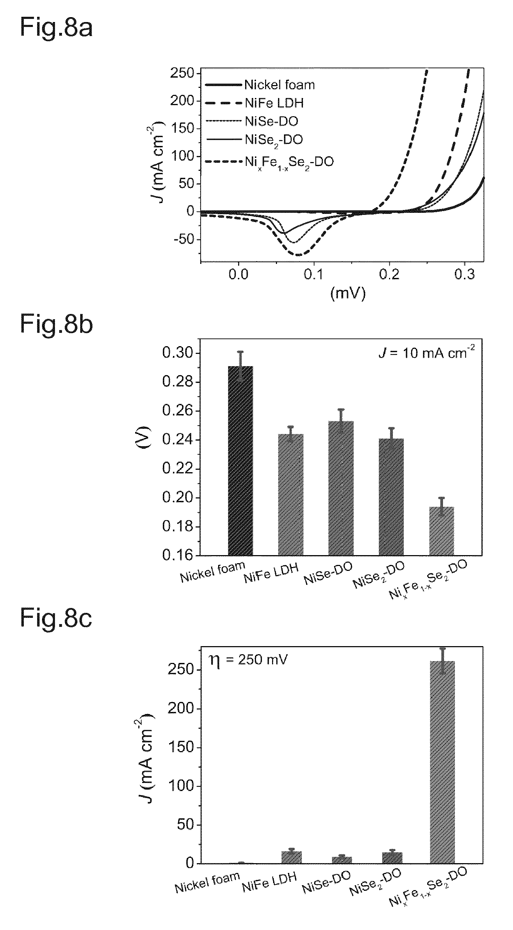

The electrocatalytic activity of NiₓFe₁₋ₓSe₂-DO, NiFe LDH, NiSe₂-DO, NiSe-DO, and Ni foam (NF) toward OER in 1 M KOH oxidation was measured and compared in Figures 8a - 8f.

As shown in Figure 8a, NiₓFe₁₋ₓSe₂-DO is the best catalyst among the five compounds, giving much higher current density (J) at the same overpotential (η). To reach J = 10 mA cm⁻², NiₓFe₁₋ₓSe₂-DO required an overpotential of only 195 mV, which was respectively 49, 46, 58 and 96 mV less than that of NiFe LDH, NiSe₂-DO, NiSe-DO, and Ni foam (Figure 8b).

The current density at η = 250 mV was 262 mA cm⁻², which was 16, 18, 29, and 262-fold higher than those of NiFe LDH, NiSe₂-DO, NiSe-DO and Ni foam, respectively (Figure 8c).

In fact, the activity of NiₓFe₁₋ₓSe₂-DO is superior to other state-of-the-art catalysts, as shown in Table 1 hereunder, wherein the three first lines show results obtained by the inventors in the context of this invention and the other results comes from previous published studies.

**Table 1 : Comparison of catalytic performance with reported Ni, NiFe based catalysts and IrO₂ nanoparticles.**

| **Materials** | **Support** | **Electrolyte** | **Loading (mg.cm⁻²)** | **Overpotential η at 10mA.cm⁻² (mV)** | **Current density J at 250 mV (mA.cm⁻²)** | **Tafel slope** |
|---|---|---|---|---|---|---|
| **NiₓFe₁₋ₓSe₂-DO** | Ni foam | 1 M KOH | ∼4.1^{‡} | 195 | -262 | 28 |
| **NiₓSe₂**-**DO** | Ni foam | 1 M KOH | ∼4.1^{‡} | 241 | 15 | 54 |
| **NiFe LDH** | Ni foam | 1 M KOH | ∼8.3 | 244 | 16 | 32 |
| **Ni₃Se₂** | Cu foam | 1 M KOH | 3 | 284 | -4 | 80 |
| **Ni₃Se₂** | Ni foam | 0.3M KOH | / | -270 | -6 | 99 |
| **NiSe** | Ni foam | 1 M KOH | 2.8 | -251 | 7.3 | 64 |
| **NiFe hydroxides** | Ni foam | 1 M KOH | / | 245 | 15 | 28 |
| **NiFe LDH** | Ni foam | 1 M KOH | / | 240 | -10 | / |
| **NiFe LDH** | Ni foam | 1 M KOH | -1 | 256 | 7.6 | 50 |
| **NiFe LDH** | Ni foam | 1 M KOH | 1 | 224 | 33 | 53 |
| **NiFe LDH/CNT** | Carbon Fiber Paper (CFP) | 1 M KOH | 0.25 | -247 | 12 | 31 |
| **NiFe LDH/r-GO** | Ni foam | 1 M KOH | 0.25/1 | 200/210 | 100 | 40 |
| **NiFe LDH/r-GO** | Ni foam | 1 M KOH | 0.25 | 195 | 257 | 39 |
| **EG/Co_{0.85}Se/NiFe LDH** | Griphite foil | 1 M KOH | 4 | 203 | 67 | 57 |
| **IrO₂** | Ni foam | 1 M KOH | 0.7 | 285 | 1.7 | 46 |
| **IrO₂** | Carbon Fiber Paper (CFP) | 1 M KOH | 3.3 | 264 | 5 | 47 |
| ‡ Assume that all the metal elements remained in the final selenides derived oxides. | | | | | | |

NiFe LDH has been regarded as the most active OER catalyst in alkaline conditions.

The activity of NiₓFe₁₋ₓSe₂-DO compares favorably even to the best hybrid catalysts made of NiFeOγ and carbon nano-materials.

The most active hybrid catalyst, r-GO/NiFe LDH, was reported by Long et.al, (Long, X. et al. A strongly coupled graphene and FeNi double hydroxide hybrid as an excellent electrocatalyst for the oxygen evolution reaction. Angew. Chem. Int. Ed. 53, 7584-7588 (2014) which gave 10 mA cm⁻² at an overpotential of 195 mV.

It was proposed that the activity of these hybrid materials originated from a synergetic effect between NiFeOγ and carbon nanomaterials (CNT, r-GO, and Carbon Quantum dots).

Thus, NiₓFe₁₋ₓSe₂-DO is until now the most active single-phase catalyst, and even higher activity might be achieved by coupling it to carbon nanomaterials.

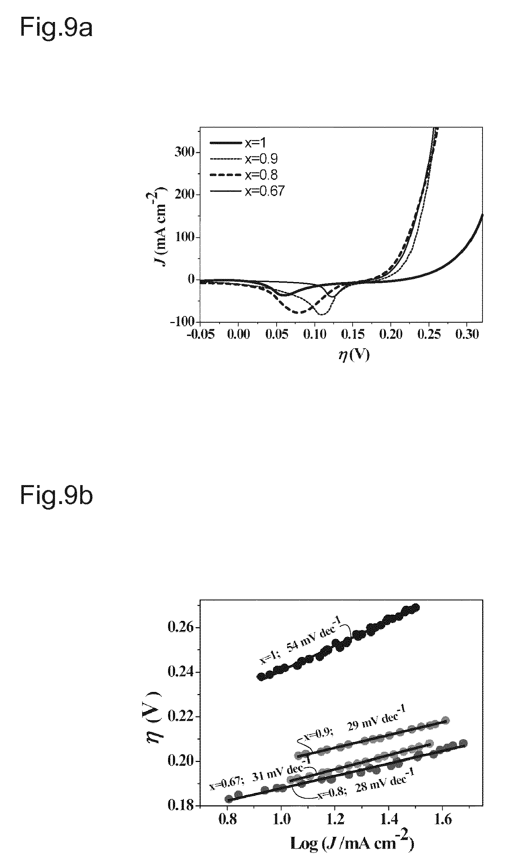

The influence of Ni:Fe atomic ratio on the OER activity was also probed. The highest activity was obtained at x = 0.8, while the samples with x = 0.9 and x = 0.67 exhibited only modestly lower activity, as presented in Figures 9a and 9b corresponding to electrochemical characterizations of NiₓFe₁₋ₓSe₂-DO with x = 1, 0.9, 0.8, and 0.67. These results are consistent with previous reports that the activity of NiFeOγ varied only slightly when the Fe:Ni ratio was changed from 0.1 and 0.55.

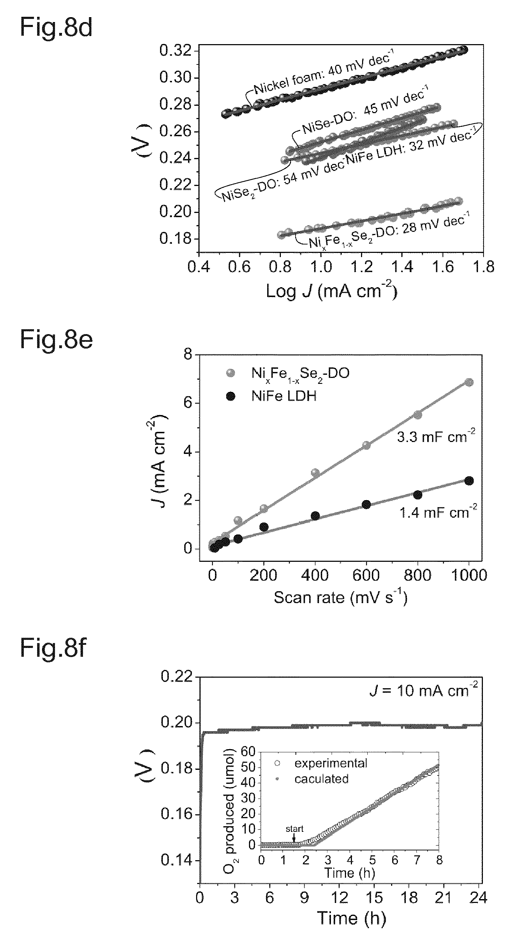

By plotting overpotential against log (J), the kinetic parameters of OER by the five catalysts (NiₓFe₁₋ₓSe₂-DO, NiFe LDH, NiSe₂-DO, NiSe-DO and Nickel foam (NF)) were calculated, as shown in Figure 8d. The NiₓFe₁₋ₓSe₂-DO has a Tafel slope of about 28 mV dec⁻¹, close to that of NiFe LDH (32 mV dec⁻¹), but much smaller than the other catalysts (40-54 mV dec⁻¹) which is indicative of a better performance.

The inventors further compared the electrochemical surface area (ECSA), estimated from their double-layer capacitance of NiₓFe₁₋ₓSe₂-DO and NiFe LDH. The ECSA of NiₓFe₁₋ₓSe₂-DO is 2.4-fold of the ECSA of NiFe LDH, as shown in Figure 8e, which does not account for the 16-fold higher catalytic activity of the former.

The superior activity of NiₓFe₁₋ₓSe₂-DO is attributed to its desirable nanostructure.

As shown in Figure 6c and 6d, NiₓFe₁₋ₓSe₂-DO nanoparticles are made of ultrathin nanosheets. If the edges of NiFeOγ are the active sites, then a higher number of active sites is expected on NiₓFe₁₋ₓSe₂-DO than on other forms of NiFeO_{y}.

To provide additional support for this hypothesis, the microstructure of NiₓFe₁₋ₓSe₂-DO was compared with NiFe LDH, one of the most active forms of NiFeOγ according to Lu, Z. et al (Lu, Z. et al. Three-dimensional NiFe layered double hydroxide film for high-efficiency oxygen evolution reaction. Chem. Commun. 50, 6479-6482 (2014)) and to Li, Z. H. et al (Li, Z. H. et al. Fast electrosynthesis of Fe-containing layered double hydroxide arrays toward highly efficient electrocatalytic oxidation reactions. Chem. Sci. 6, 6624-6631 (2015)).

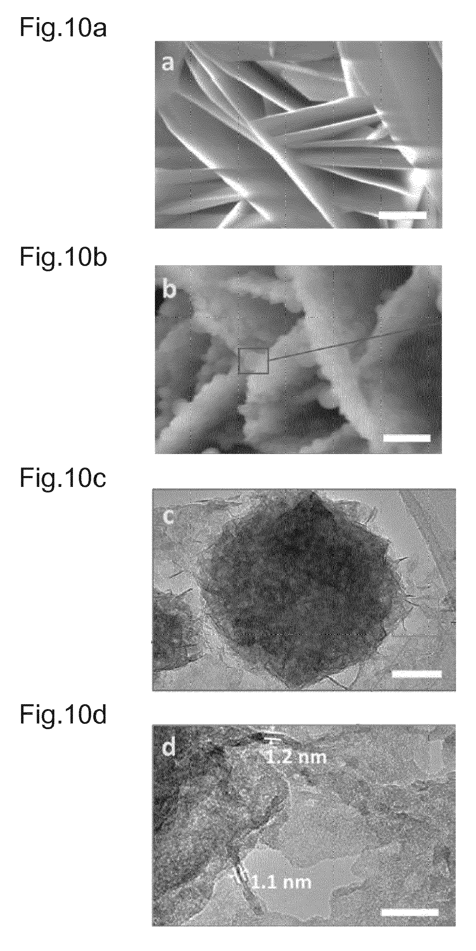

SEM images show that NiFe LDH is made of large single-crystalline nanoplates whereas NiₓFe₁₋ₓSe₂-DO (Figure 10a) is made of highly porous nanoplates consisting of ultrathin nanosheets (Figure 10b - 10d). Thus, NiₓFe₁₋ₓSe₂-DO's particle size is much smaller than NiFe LDH.

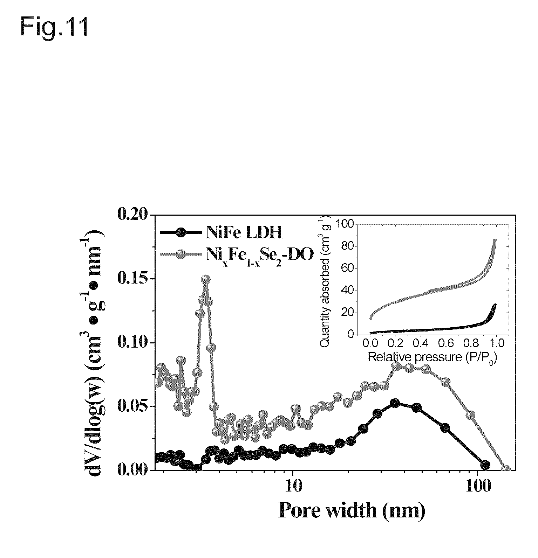

The porosity of NiₓFe₁₋ₓSe₂-DO and NiFe LDH were probed by N₂ adsorption-desorption measurements. Compared to NiFe LDH, more pores were formed in NiₓFe₁₋ₓSe₂-DO, as illustrated by Figure 11. More importantly, an additional sharp peak was observed at a size range of 2.5-4 nm for NiₓFe₁₋ₓSe₂-DO, indicating the formation of tiny nanopores. The nanoporosity resulted in a high BET surface area (Brunauer-Emmett-Teller theory) of 109 m² g⁻¹ for NiₓFe₁₋ₓSe₂-DO, which is 8.3 times higher than that of NiFe LDH. The higher porosity and smaller particle size of NiₓFe₁₋ₓSe₂-DO compared to NiFe LDH would lead to higher number of edge sites in the former, which might explain its superior catalytic activity.

The stability of OER catalyzed by the NiₓFe₁₋ₓSe₂-DO electrode was tested at a constant current density J of 10 mA cm⁻² for 24 hours. Figure 8f shows that after an activation period of 0.5 hours, the overpotential remained at about 195 mV during 24 hours. The Faradaic efficiency of OER was determined using a fluorescence O₂ probe. A quantitative yield was found quantitative during a 6.5 hours electrolysis experiment (inset in Figure 8f).

Hereunder is more information concerning the equipements, products and methods that have been used in examples 1 to 5.

### Materials characterization

Powder X-ray powder diffraction (PXRD) patterns were recorded on an X'Pert Philips diffractometer with monochromatic CuK*α* radiation (*λ* = 1.540598 Å) and a fast Si-PIN multi-strip detector. As-synthesized NiSe₂ and NiₓFe₁₋ₓSe₂ were used directly for PXRD measurements. Morphology and microstructure was examined by a Phillips (FEI) XLF-30 FEG scanning electron microscope (SEM) and a FEI Tecnai Osiris transmission electron microscopy (TEM) equipped with high brightness XFEG gun. Energy-dispersive X-ray spectroscopy (EDX) mapping images were taken under a scanning TEM modal. Samples for TEM were prepared by drop-drying the samples from their diluted ethanol suspensions onto carbon-coated copper grids. XPS measurements were performed on a PHI5000 VersaProbe II XPS system by Physical Electronics (PHI) with a detection limit of 1 atomic percent. Monochromatic X-rays were generated by an Al Kα source (1,4867 eV). The diameter of the analyzed area is 10 µm. N₂ adsorption-desorption measurements were conducted on Micromeritics 3Flex adsorption analyzer at 77K. Prior to the measurements, the samples were degassed at 100 °C under vacuum for 1 hour. Pore size distributions were calculated by the BJH method from the desorption branches of the isotherms.

### Electrochemical measurement

Electrochemical characterizations including cyclic voltammetry (CV), linear sweep voltammetry (LSV), and chronopotentiometry were carried out on a Gamry Reference 3000 electrochemical instrument using a three-electrode electrochemical system. 1 M KOH solution was used as electrolyte, and an Ag/AgCl electrode with saturated KCl filling solution and Pt wire were used as reference and counter electrodes, respectively. For catalyst grown on nickel foam (NiSe₂, NiₓFe₁₋ₓSe₂ and NiFe-LDH), they were used as work electrodes directly. Hot glue was employed to fix the working area at 0.2 cm⁻² (0.5 cm x 0.4 cm).

Before test, the reference electrode was measured against another unused Ag/AgCl reference electrode stored in saturated KCl solution. Calibration of Ag/AgCl reference electrodes was done by measuring the RHE potential using a Pt electrode under a H₂ atmosphere. During the test, Ag/AgCl reference electrode was constructed to a double-junction electrode to minimize contact between KOH and KCl. CVs was performed at a scan rate of 1 mV s⁻¹, and the average of the two potentials at which the current crossed zero was taken to be the thermodynamic potential for the hydrogen electrode reaction, In 1 M KOH electrolytes, Evs.RHE = Evs.Ag/AgCl + 1.009 V, and overpotential for OER was *η* = Evs.RHE -1.23 V = Evs.Ag/AgCl - 0.221 V. Ohmic drop correction was performed using the current interrupt (CI) method by the potentiostat.

Before recording the catalytic activity, catalysts were activated by a chronopotentiometry scan with constant current density of 5-10 mA cm⁻² until reaching a stable state. Normally, we set the pretreatment time at 12 h. Following the preconditioning, 2 cycles of LSVs were measured at a scan rate of 1 mV s⁻¹.

Tafel slopes were calculated based on the LSV curves by plotting overpotential against log(current density).

Chronopotentiometry measurements were performed to evaluate the long-term stability.

The ECSA was determined by measuring the capacitive current associated with double-layer charging from the scan-rate dependence of CVs. For this, the potential window of CVs was 0.2-0.3 V vs Ag/AgCl. The scan rates were 5, 10, 25, 50, 100, 200, 400, 600, 800, and 1000 mV s-1. The double layer capacitance (Cdl) was estimated by plotting the Δ J= (Ja - Jc) at 0.25 V vs. Ag/AgCl against the scan rate. The linear slope is twice of the double layer capacitance.

### Faradaic Efficiency Test

The measurements of O₂ were performed using an Ocean Optics Multifrequency Phase Fluorimeter (MFPF-100) with a FOXY-OR 125 probe. A linear 2-point calibration curve was created using air (20.9% O₂) and a sealed glass cell that had been purged with N₂ for more than 2 hours (0% O₂). Electrolysis experiments were performed in an airtight H shape cell. The platinum counter electrode was inserted into one side of the cell. The modified working electrode, an Ag/AgCl reference electrode (has a potential of 0.197 V vs. NHE) and a magnetic stirring bar were inserted in the other side. The cell was filled with 1 M KOH solution until the head space of the compartment containing the working electrode is about 7.9 mL. The oxygen probe was inserted into this head space. The cell was purged with nitrogen for 20 min, and the O₂ concentration in the headspace was then monitored for 5 hours to establish a baseline. A constant oxidation current density of 14 mA cm-2 was passed for 6.5 hours. The faradaic yield was calculated from the total amount of charge Q (C) passed through the cell and the total amount of oxygen produced nO₂(mol). Q = t/1000 (C), where t is the time (s) for the constant oxidation current. The total amount of oxygen produced was measured using the MFPF-100 with a FOXY 125 probe. Assuming that four electrons are needed to produce one O₂ molecule, the Faradaic efficiency can be calculated as follows: Faradaic efficiency = 4Fx nO₂/Q =4000Fx nO₂/t, where F is the Faraday constant.

### Materials

Nickel nitrate hexahydrate (Ni(NO₃)₂·6H₂O, ≥99%, Fluka), iron(II) sulfate heptahydrate (FeSO₄·7H2O, ≥99%, Sigma-Aldrich), ammonium fluoride (NH4F, ≥98%, Sigma-Aldrich), urea (CO(NH₂)₂, ≥99%, Acros), selenium powder (Se, ≥99.5%,Acros), sodium hydroxide (NaOH, REACTOLAB SA), hydrazine monohydrate (N₂H₄·H₂O, ≥64-65 wt %, Sigma-Aldrich) and N, N-dimethylformamide (DMF, C₃H₇NO, ≥99.8%, Sigma-Aldrich) were all used as received without any purification.

Nickel foam (purity 95%, porosity 95%, thickness 1.6 mm, bulk density 0.45 g·cm-3, GoodFellow Cambridge Ltd.) was cleaned ultrasonically for ten minutes with acetone and then with HCl (37 wt%) solution, and subsequently washed with water and ethanol.

Deionized water (>18 MΩ·cm resistivity) obtained from a Milli-Q integral water purification system (Merck Millipore Corporation) was used throughout all experiments.

Inventors have synthesized a hitherto unknown selenide compound of general formula (I) and have shown that, upon in-situ transformation into oxides, this compound gives rise to the nickel iron diselenide derived oxide according to the invention which is, until now, the most active single-phase OER catalyst in alkaline solutions.

Both NiSe₂ and FeSe₂ have been reported to be good counter electrode material for dye-sensitized solar cells and to be efficient anode material in ion batteries, in particular in Na-ion batteries. The inventors therefore have good reasons to believe that the compound of formula (I) that they have developed would also be a good counter electrode materials for dye-sensitized solar cell and an efficient counter electrode material for dye-sensitized solar cells.

## Claims

1. Nickel iron diselenide compound of general formula (I): NiₓFe₁₋ₓSe₂, wherein 0 < x < 1.

2. Nickel iron diselenide compound of general formula (I) as defined in claim 1, **characterized in that** it is nanostructured.

3. Nickel iron diselenide according to any of claims 1 or 2, wherein 0.7 < x < 0.9, preferably x = 0.8.

4. Nickel iron diselenide derived oxide compound obtained by oxidation of compound according to claims 1 to 3.

5. Nickel iron diselenide derived oxide compound according to claim 4 wherein this compound is of general formula (II): NiₓFe₁₋ₓ(OH)₃₋ₓ wherein 0 < x < 1.

6. Nickel iron diselenide derived oxide of any of claims 4 or 5, **characterized in that** it is nanostructured.

7. A method for producing nickel iron diselenide compound of general formula (I) as defined in claim 1, comprising the steps of :
a. using a hydrothermal method to make metal hydroxide precursors imcluding Ni and Fe grow on nickel foam ; and
b. converting the metal hydroxide precursors into diselenides via a solvothermal selenization treatment.

8. The method according to claim 7, wherein said metal hydroxide precursors include Ni(NO₃)₂·6H₂O and FeSO₄·7H₂O.

9. The method according to claim 8, wherein :
- step (a) comprise the following steps
(i) dissolve nickel salt, iron salt, NH₄F and urea or hexamethylenetetramine in water
(ii) seal the obtained solution with nickel foam in an autoclave
(iii) heat at a temperature between 100°C and 180°C for a time between 6 and 48 hours
(iv) wash with distilled water
and step (b) comprises the following steps :
(v) submerge the as-prepared nickel foam coated with NiFe hydroxides into autoclave containing Se, NaOH, hydrazine and dimethylformamide (DMF) or pyridine ; and
(vi) keep at a temperature between 80 and 200°C for a time between 1 and 12 hours.

10. The method according to claim 9 wherein nickel salts are chosen among Ni(NO₃)₂.6H₂O, NiCl₂·6H₂O and Ni(OAc)₂·4H₂O, iron salts are chosen among FeSO₄·7H₂O, FeCl₂·4H₂O and Fe(NO₃)₃·9H₂O.

11. The method according to any of claims 9 and 10, further comprising a step (i') between steps (i) and (ii) consisting in a first cleaning of said nickel foam ultrasonically with acetone and then with HCl solution and susbequently in a second cleaning with water and ethanol.

12. A method for producing nickel iron diselenide derived oxide as claimed in any of claims 4 to 6, comprising the step of subjecting the nickel iron diselenide compound as defined in any of claims 1, 2 or 3 to galvanostatic electolysis until reaching a stable potential.

13. Use of nickel iron diselenide compound of formula (I) as defined in claim 1 as a precursor of a catalyst of oxygen evolution reaction.

14. Use of nickel iron diselenide derived oxide compound as a catalyst of oxygen evolution reaction.

15. Use of nickel iron diselenide compound of formula (I) as defined in claim 1 as a counter electrode materials for dye-sensitized solar cells or as an anode material in ion-batteries.
